(19) Europäisches Patentamt
European Patent Office
Office européen des brevets

(11) **EP 2 321 896 B1**

(12) **EUROPÄISCHE PATENTSCHRIFT**

(45) Veröffentlichungstag und Bekanntmachung des Hinweises auf die Patenterteilung:
**17.10.2012 Patentblatt 2012/42**

(21) Anmeldenummer: **09781124.4**

(22) Anmeldetag: **27.07.2009**

(51) Int Cl.:
*H02P 7/29* (2006.01)   *H02M 1/08* (2006.01)
*G01R 1/00* (2006.01)

(86) Internationale Anmeldenummer:
**PCT/EP2009/059662**

(87) Internationale Veröffentlichungsnummer:
**WO 2010/012681 (04.02.2010 Gazette 2010/05)**

(54) **VERFAHREN ZUR MESSWERTERMITTLUNG IN EINEM GETAKTET ANGESTEUERTEN SYSTEM**

METHOD FOR DETERMINING MEASURED VALUES IN A SYSTEM DRIVEN IN CLOCKED FASHION

PROCÉDÉ DE DÉTERMINATION DE LA VALEUR MESURÉE DANS UN SYSTÈME À COMMANDE CYCLIQUE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **01.08.2008   DE 102008040929**

(43) Veröffentlichungstag der Anmeldung:
**18.05.2011   Patentblatt 2011/20**

(73) Patentinhaber: **Robert Bosch GmbH
70442 Stuttgart (DE)**

(72) Erfinder:
• **SCHMIDTLEIN, Andreas
71732 Tamm (DE)**
• **BAUMGAERTNER, Rainer
74397 Pfaffenhofen (DE)**

(56) Entgegenhaltungen:
**DE-A1- 10 359 224      DE-A1-102005 013 143
JP-A- 54 104 766         US-A1- 2005 231 253
US-A1- 2007 109 821**

EP 2 321 896 B1

**Beschreibung**

Die Erfindung beschreibt ein Verfahren zur Messwertermittlung in einem getaktet angesteuerten System. Insbesondere bezieht sich die vorliegende Erfindung auf ein Verfahren zur Messwertermittlung in einem getaktet angesteuerten System zur Drehzahlermittlung an einem Gleichstrommotor.

Stand der Technik

In getakteten Systemen besteht oft die Notwendigkeit, parallel - also mehr oder weniger gleichzeitig - zur Ansteuerung Messwerte aufzunehmen. Von der Ansteuerung abhängige Messwerte stellen dabei erhöhte Anforderungen an die Messwertaufbereitung. Gebräuchliche Verfahren, die z.B. mit analogen Filtern arbeiten, sind schwer zu realisieren. Ihre entsprechende Auslegung ist statisch und kann im Betrieb nicht angepasst werden. Zwar kann durch Verwendung von Sample- and Hold-Gliedern diese Situation verbessert werden, jedoch stößt in Systemen, in denen sich die Ansteuerung fortlaufend ändert und/oder in denen ein zusätzliches, evtl. sogar variierendes Störsignal dem Messsignal überlagert ist, auch die Auslegung der Messumgebung mit Hilfe von Sample- and Hold-Gliedern an ihre Grenzen.
Das Dokument DE10359224 beschreibt eine Vorrichtung und ein Verfahren zur Erfassung der Nachlaufspannung eines Gleichstrommotors, wobei der Gleichstrommotor durch eine getaktete Ansteuerung betrieben wird. Dabei weist die getaktete Ansteuerung wenigstens während des Einschaltvorgangs des Motors ein vorgebbares Puls/Pulspausenverhältnis auf. Weiterhin ist wenigstens ein Auswertemittel vorgesehen, welches die Nachlaufspannung aus einer die Nachlaufspannung des Gleichstrommotors repräsentierenden Nachlaufspannungsgrösse erfasst. Zur Erfassung der generatorischen Nachlaufspannung wird ein Delta-Sigma-Wandler als integrierender AD-Wandler verwendet. Mit einem Delta-Sigma-Wandler lässt sich innerhalb der Integrations- bzw. Konvertierungszeit die erfasste Nachlaufspannung am Motor 100 in einen Mittelwert umwandeln, wobei der Mittelwert als Nachlaufspannungsgröße zur weiteren Verarbeitung genutzt werden kann. Der Vorteil bei der Verwendung eines Delta-Sigma-Wandler liegt darin, dass die Nachlaufspannung kontinuierlich erfasst und als digitales Signal beispielsweise an einen Mikroprozessor zur Weiterverarbeitung ausgegeben werden kann. Da die generatorische Nachlaufspannung über die komplette Zeit erfasst und integriert wird, kann ein exakter Mittelwert der Nachlaufspannung gebildet werden.
Das Dokument DE102005013143 beschreibt eine Vorrichtung und ein Verfahren zur Erfassung der Nachlaufspannung eines Gleichstrommotors, wobei der Gleichstrommotor durch eine getaktete Ansteuerung betrieben wird. Im Normalbetrieb wird der Gleichstrommotor mittels einer PWM-Ansteuerung und eines ersten vorgebbaren Puls/Pulspausenverhältnisses angesteuert. Zur Erfassung einer Nachlaufspannungsgröße, die die Nachlaufspannung des Motors repräsentiert, ist ein Auswertemittel vorgesehen. Weiterhin ist vorgesehen, dass zur Erfassung der Nachlaufspannungsgröße der Gleichstrommotor mit einem vorgebbaren variablen zweiten Puls/Pulspausenverhältnis angesteuert wird. Der durch das zweite Puls/Pulspausenverhältnis an den Gleichstrommotor angelegte Strom wird dabei während einer vorgebbaren ersten Zeitdauer, ausgehend von dem während der getakteten Ansteuerung mit dem ersten vorgebbaren Puls/Pulspausenverhältnis an den Motor angelegten Strom, auf einen niedrigeren Wert abgebaut.

Im Rahmen der Ansteuerung eines Elektromotors ergibt sich insbesondere bei Gleichstrommotoren bei der Messung der generatorischen Nachlaufspannung das Problem, dass bei herkömmlichen Verfahren der Einfluss von drehzahlabhängigen Störsignalanteilen relativ groß ist.

Vorteile der Erfindung

Die vorliegende Erfindung überwindet die oben beschriebene Problematik durch Bereitstellung eines Verfahrens nach Anspruch 1 zur Messwertermittlung in einem getaktet angesteuerten Gleichstrommotor, wobei die Taktung Ansteuerungszeiträume aufweist, in denen der Gleichstrommotor angesteuert wird, und Nichtansteuerungszeiträume aufweist, in denen der Gleichstrommotor nicht angesteuert wird, mit folgenden Schritten: Einstellen einer Dauer der Nichtansteuerungszeiträume zumindest während der Messwerteermittlung abhängig von einer Motorlast und/oder einer Motordrehzahl des Gleichstrommotors. Bestimmen von ersten Integrationszeiträumen in Abhängigkeit von der Taktung, wobei die ersten Integrationszeiträume innerhalb wenigstens eines der Ansteuerungszeiträume liegen, und/oder Bestimmen von zweiten Integrationszeiträumen in Abhängigkeit von der Taktung, wobei die zweiten Integrationszeiträume innerhalb wenigstens eines der Nichtansteuerungszeiträume liegen, Erfassen einer generatorischen Nachlaufspannung des Gleichstrommotors, Ermitteln von Summations- und/oder integrationswerten durch Summation und/oder Integration der generatorischen Nachlaufspannung während der ersten und/oder zweiten Integrationszeiträume, Ermitteln des Messwertes für wenigstens einen der Ansteuerungszeiträume und/oder Nichtansteuerungszeiträume auf Grundlage von Zeitdaten der ersten und/oder zweiten Integrationszeiträume und von den ermittelten Summations- und/oder Integrationswerten, wobei die Zeitdaten das Integral einer Schalterfunktion über die Integrationszeit räume aufweisen.

Das erfindungsgemäße Verfahren hat den Vorteil, dass es während des Betriebs des getaktet angesteuerten Systems anpassbar ist. Zusätzlich erlaubt dieses Verfahren eine Messwerterfassung über mehrere Ansteuerungszeiträume. Dadurch sind präzise Messwertaufnahmen nicht nur in Nichtansteuerungszeiträumen, sondern auch in Ansteuerungszeiträumen möglich, in welchen die Anwendung konventioneller Verfahren z. B. wegen notwendiger Einschwingzeiten und physikalischer Begrenzungen aussichtslos ist.

Vorzugsweise erfolgt das Bestimmen der ersten und/oder zweiten Integrationszeiträume außerdem in Abhängigkeit von wenigstens einem individuellen Parameter des Systems. Dieser individuelle Parameter kann dabei ein systemimmanenter Parameter sein, also ein Parameter, der durch die hardware- und/oder softwaremäßige Konfiguration des Systems selbst gegeben ist, oder aber auch ein vom System ausgegebener Messwert. Dadurch kann eine Rückkopplungsmöglichkeit vom System zurück zur Messumgebung geschaffen werden, wodurch ein Regelkreislauf zwischen System und Messumgebung realisierbar ist.

Vorzugsweise wird bei den individuellen Parametern die Trägheit des Systems und/oder seiner Messumgebung berücksichtigt. Dadurch können physikalische Realitäten, wie z. B. endliche Flankensteilheiten bei Mess- und/oder Ansteuerungssignalen sowie Schaltverzögerungen durch Induktivitäten und Kapazitäten bei den Ansteuer- und/oder Messvorgängen einkalkuliert werden. Dabei ist es insbesondere vorteilhaft, bei den individuellen Parametern die Zeitverzögerung zu berücksichtigen, mit der das System auf die Ansteuerungen reagiert. So können z. B. durch zeitliche Verzögerung des Integrationszeitraums die Verzögerungen des Schaltersignals sowie die Verzögerungen bei den Durchschaltvorgängen an einer Funktionseinheit des Systems ausgeglichen werden.

Ferner ist es vorteilhaft, bei den individuellen Parametern die Zeitverzögerung bei der Durchführung von einem oder mehreren der Schritte des erfindungsgemäßen Verfahrens zu berücksichtigen, insbesondere beim Erfassen der von der Ansteuerung abhängigen Messgröße des Systems, beim Ermitteln von Summations- und/oder Integrationswerten durch Summation und/oder Integration der Messgröße während der ersten und/oder zweiten Integrationszeiträume, und beim Ermitteln des Messwertes für wenigstens einen der Ansteuerungszeiträume und/oder Nichtansteuerungszeiträume auf Grundlage von Zeitdaten der ersten und/oder zweiten Integrationszeiträume und von den ermittelten Summations- und/oder Integrationswerten.

Gemäß einer vorteilhaften Ausführungsform der Erfindung umfasst der Schritt des Ermittelns von Summations- und/oder Integrationswerten durch Summation und/oder Integration der Messgröße während der ersten und/oder zweiten Integrationszeiträume die Verwendung von digitaler Summation und/oder analoger Integration. Durch eine solche Mischrealisierung können die Stärken beider Varianten jeweils optimal genutzt werden.

Dabei ist die Mischung mindestens eines analogen Integrationsschrittes mittels eines Spannungs-/Frequenzwandlers und mindestens einer digitalen Summation mittels einer Hardwarelogik aus Zählern besonders vorteilhaft. Auch die Mischung mindestens eines analogen Integrationsschrittes mittels Delta/Sigma-Modulatoren und mindestens einer digitalen Summation mittels einer Hardwarelogik aus Zählern ist denkbar.

Gemäß einer besonders bevorzugten Ausführungsform des erfindungsgemäßen Verfahrens umfasst die Messwertermittlung die Ermittlung der generatorischen Spannung eines Gleichstrommotors. Vorzugsweise ist das getaktet angesteuerte System ein Gleichstrommotor. Als die von der Ansteuerung abhängige Messgröße des Systems eignet sich die generatorische Spannung, insbesondere die generatorische Nachlaufspannung des Gleichstrommotors. Die Nachlaufspannung entspricht der generatorischen Spannung im nichtangesteuerten Zustand, also im antriebslosen Nachlauf.

Dabei ist es von Vorteil, dass die Summations- und/oder Integrationswerte nur während der zweiten Integrationszeiträume innerhalb wenigstens eines der Nichtansteuerungszeiträume ermittelt werden. Dadurch kann der Einfluss von Störsignalanteilen, die während der Ansteuerungszeiträume durch den Motor verursacht werden, reduziert werden. Damit ist letztlich eine Verbesserung der Qualität des ermittelten Nachlaufspannungswertes möglich. Dadurch ist eine präzisere Motorregelung möglich, insbesondere bei niedrigen Drehzahlen des Gleichstrommotors.

Ferner ist es von Vorteil, wenn die Zeitdaten der zweiten Integrationszeiträume abhängig von der Motorlast und/oder der Motordrehzahl bestimmt werden. Insbesondere die Dauer der zweiten Integrationszeiträume orientiert sich dabei vorzugsweise an der Dauer der Nichtansteuerungszeiträume, innerhalb derer die zweiten Integrationszeiträume liegen. Dabei kann auch, zumindest vorübergehend für den Messprozess, die Dauer der Nichtansteuerungszeiträume abhängig von der Motorlast und/oder der Motordrehzahl eingestellt werden, um eine gewünschte, vorbestimmte Qualität der Messung zu erhalten. Insbesondere bei niedrigeren Drehzahlen wird deshalb zumindest ein längerer Nichtansteuerungszeitraum als bei höheren Drehzahlen gewählt. Dies ermöglicht eine bessere Filterung der Störanteile im niedrigen Drehzahlbereich und eine höhere Dynamik im höheren Drehzahlbereich.

Auf Grundlage des ermittelten Messwertes für die generatorische Nachlaufspannung kann die Motordrehzahl ermittelt werden. Dabei kann der Umstand berücksichtigt werden, dass die Nachlaufspannung proportional zur Motordrehzahl ist. Aufgrund der durch das erfindungsgemäße Verfahren optimierten Präzision bei der Bestimmung des Nachlaufspannungswertes ist durch diese Proportionalität auch gleichzeitig eine hohe Präzision bei der Bestimmung der Motordrehzahl erreichbar.

Weitere Merkmale und Vorteile von Ausführungsformen der Erfindung ergeben sich aus der nachfolgenden Beschreibung mit Bezug auf die beigefügten Figuren.

Kurzbeschreibung der Figuren

Es zeigen:

Fig. 1 einen möglichen Ablauf des erfindungsgemäßen Verfahrens,

Fig. 2 eine erläuternde Darstellung eines vorteilhaften Zusammenwirkens der Schritte des erfindungsgemäßen Verfahrens,

Fig. 3 den zeitlichen Verlauf verschiedener Signale im Rahmen der Durchführung des erfindungsgemäßen Verfahrens,

Fig. 4 eine erläuternde Darstellung eines vorteilhaften Zusammenwirkens der Schritte des erfindungsgemäßen Verfahrens gemäß einer ersten Ausführungsform,

Fig. 5 eine erläuternde Darstellung eines vorteilhaften Zusammenwirkens der Schritte des erfindungsgemäßen Verfahrens gemäß einer zweiten Ausführungsform,

Fig. 6 eine vereinfachte erläuternde Darstellung eines vorteilhaften Zusammenwirkens der Schritte des erfindungsgemäßen Verfahrens gemäß einer besonders bevorzugten Ausführungsform,

Fig. 7 den zeitlichen Verlauf verschiedener Signale im Rahmen der Durchführung des erfindungsgemäßen Verfahrens gemäß der besonders bevorzugten Ausführungsform, und

Fig. 8 eine detaillierte erläuternde Darstellung des vorteilhaften Zusammenwirkens der Schritte des erfindungsgemäßen Verfahrens gemäß der besonders bevorzugten Ausführungsform.

Beschreibung der Ausführungsbeispiele

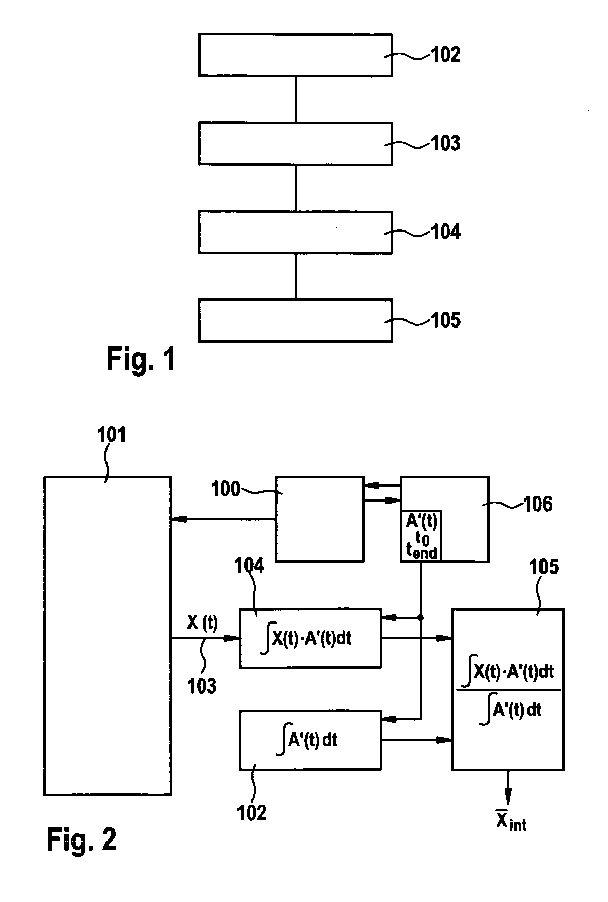

Zunächst werden anhand der Fig. 1 die verschiedenen Möglichkeiten erläutert, wie das erfindungsgemäße Verfahren ablaufen kann. Dieses Verfahren wird eingesetzt zur Messwertermittlung in einem getaktet angesteuerten System 101, wobei die Taktung Ansteuerungszeiträume aufweist, in denen das System 101 angesteuert wird, und Nichtansteuerungszeiträume aufweist, in denen das System 101 nicht angesteuert wird.

Gemäß einem bevorzugten Verfahrensablauf werden zunächst erste Integrationszeiträume in Abhängigkeit von der Taktung bestimmt, wobei die ersten Integrationszeiträume innerhalb wenigstens eines der Ansteuerungszeiträume liegen (Schritt 102.1). Zusätzlich oder alternativ dazu werden zweite Integrationszeiträume in Abhängigkeit von der Taktung bestimmt, wobei die zweiten Integrationszeiträume innerhalb wenigstens eines der Nichtansteuerungszeiträume liegen (Schritt 102.2). Durch dieses Vorgehen wird also eine Separierung von Integrationsvorgängen erreicht, und zwar einerseits in Integrationsvorgänge während Ansteuerphasen und andererseits in Integrationsvorgänge während Nichtansteuerphasen. Die Integrationsvorgänge können sich dabei über mehrere voneinander getrennte Ansteuerphasen bzw. Nichtansteuerphasen erstrecken, sie können aber auch genauso gut nur über einen Teil einer einzigen Ansteuerphase bzw. Nichtansteuerphase laufen.

Dann wird eine von der Ansteuerung abhängige Messgröße des Systems 101 erfasst (Schritt 103). Dies kann z.B. die Spannung sein, die über einer bestimmten Komponente des Systems 101 abfällt. Es ist aber auch jede andere Messgröße denkbar.

Nun werden durch Summation und/oder Integration der Messgröße während der ersten und/oder zweiten Integrationszeiträume Summations- und/oder Integrationswerte ermittelt (Schritt 104). Dabei kann die Durchführung des Schrittes 104 die Verwendung von digitaler Summation und/oder analoger Integration umfassen, also wahlweise nur auf Grundlage digitaler Summation oder analoger Integration, oder auf Grundlage einer Mischung aus den beiden Varianten. Generell gilt für die gesamte Darstellung der vorliegenden Erfindung, dass nicht notwendigerweise integriert werden muss, sondern in der tatsächlichen Realisierung aller Verfahrensschritte jegliche Näherungsverfahren eingesetzt werden können, wie z. B. diskrete digitale bzw. analoge Summation. Die grundlegenden Charakteristika des erfindungsgemäßen Verfahrens sind von der Wahl des verwendeten Integrationsverfahrens unabhängig.

Anschließend wird auf Grundlage von Zeitdaten der ersten und/oder zweiten Integrationszeiträume und auf Grundlage von den ermittelten Summations- und/oder Integrationswerten der Messwert für wenigstens einen der Ansteuerungszeiträume und/oder Nichtansteuerungszeiträume ermittelt (Schritt 105). Als die Zeitdaten der ersten und/oder zweiten Integrationszeiträume kommen in erster Linie der jeweilige zeitliche Anfang und das jeweilige zeitliche Ende des Integrationszeitraums in Frage. Aus diesen Daten kann letztlich auch die Dauer des jeweiligen Integrationszeitraums ermittelt werden, der wie oben bereits erläutert nicht an einem einzigen Stück vorliegen muss.

Es wird betont, dass der in Fig. 1 dargestellte Ablauf der Verfahrensschritte rein exemplarisch ist. Es ist auch eine andere Abfolge der Schritte denkbar. So kann z. B. das Bestimmen der ersten und/oder zweiten Integrationszeiträume zu jedem beliebigen Zeitpunkt des Verfahrens erfolgen. Auch das Erfassen der von der Ansteuerung abhängigen Messgröße des Systems muss nicht notwendigerweise nach dem Bestimmen der ersten und/oder zweiten Integrationszeiträume erfolgen, sondern die Messgröße kann auch vorher, quasi auf Vorrat, erfasst und evtl. aufgezeichnet werden.

Im Folgenden wird unter Bezugnahme auf die Figuren. 1, 2 und 3 anhand des zeitlichen Verlaufs verschiedener Signale im Rahmen der Durchführung des erfindungsgemäßen Verfahrens ein vorteilhaftes Zusammenwirken der Schritte des erfindungsgemäßen Verfahrens dargestellt.

Das zu messende Signal X(t) 202, also die von der Ansteuerung abhängige Messgröße des Systems 101, wird im Schritt 103 erfasst und an den Eingang einer Auswertelogik geführt. Die Auswertelogik berechnet, beispielsweise durch Integration, das Integral $X_{int}$ während der Ansteuerungszeiträume des Schalters, also in denjenigen Zeiträumen, in denen die Schalterfunktion A(t) den Wert 1 annimmt. Da reale Systeme nur endliche Flankensteilheiten aufweisen, reagiert sowohl das System 101 sowie dessen Messumgebung lediglich zeitverzögert. Deshalb beschreibt die für die Erfassung der Messgröße relevante Schalterfunktion A'(t) 201 die Ansteuerung 100 unter Berücksichtigung der individuellen physikalischen Gegebenheiten, wie Schaltverzögerungen, Induktivitäten und Kapazitäten. Im Gegensatz zur eigentlichen Schalteransteuerung A(t) (nicht dargestellt) sind bei der relevanten Schalterfunktion A'(t) nur die für die Messung relevanten Zeitpunkte durch einen Funktionswert gleich 1 gekennzeichnet. A'(t) kann aus A(t) beispielsweise durch eine zeitliche Verschiebung hervorgehen, z. B. durch Verschiebung um wenige Mikrosekunden, um die Durchschaltvorgänge am Motorschalter des Systems 101 zu berücksichtigen. Eine weitere Möglichkeit ist die völlig freie Definierung der Schalterfunktion A'(t), z. B. dass die positive, also ansteigende Flanke von A'(t) einige x Mikrosekunden auf die positive Flanke von A(t) folgt, und ebenso frei definierbar die fallende Flanke von A'(t) einige y Mikrosekunden auf die fallende Flanke von A(t) folgt. Damit können z. B. induktiv verursachte Ansteuerbereiche von der Messung ausgeschlossen werden.

Für das Integral $X_{int}$ über die Messgröße X(t) während der Ansteuerungszeiträume gilt dann folgendes:

$$X_{int} = \int X(t) \cdot A'(t)\, dt \qquad \text{(Schritt 104)}$$

Zusätzlich umfasst die Auswertelogik eine Funktionalität zum Ermitteln der Gesamtansteuerungszeitdauer des Motorschalters während der Messdauer:

$$D_{int} = \int A'(t)\, dt \qquad \text{(Graph 203, Schritt 102)}$$

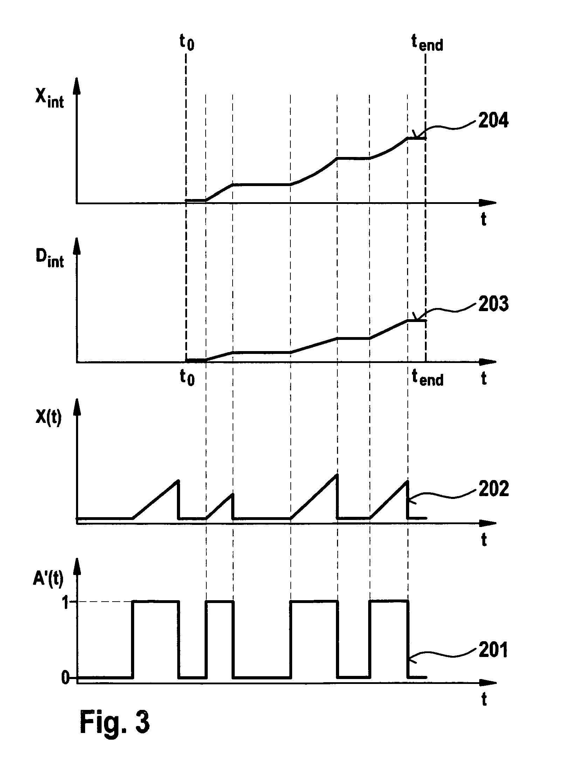

Vorzugsweise werden $X_{int}$ und $D_{int}$ synchron ermittelt. Damit ist die Messung über einen vorbestimmten Zeitraum möglich. Die Integrationsgrenzen sind in Fig. 3 mit $t_0$ und $t_{end}$ bezeichnet. Eine entsprechende Ablaufsteuerung 106 generiert A'(t) und $t_0$ und $t_{end}$ abhängig von der gewählten Realisierung.

Die Auswertungs-Software ist dann in der Lage, z. B. den mittleren Spannungsabfall $\overline{X}_{int}$ im Messzeitraum auf Grundlage folgender Beziehung zu ermitteln:

$$\overline{X}_{int} = \frac{\int_{t_0}^{t_{end}} X(t) \cdot A'(t)\, dt}{\int_{t_0}^{t_{end}} A'(t)\, dt} \qquad \text{(Graph 204, Schritt 105)}$$

$\overline{X}_{int}$ stellt dann den im Schritt 105 ermittelten Messwert dar.

Das beschriebene Verfahren kann sowohl durch teilweise analoge Integration als auch durch digitale Summation realisiert werden. Eine Mischung von analoger Integration und digitaler Summation ist ebenfalls möglich.

Als konkrete Realisierungsmöglichkeiten kommen beispielsweise in Betracht:

- analoge Integration in HW Beschaltung;
- Überabtastung mit extrem schnellen und hochauflösenden Analog-/Digitalwandlern und anschließender Auswertung in Software. Der Integrationscharakter ist dann besonders gut erfüllt, wenn die Abtastfrequenz sehr hoch ist;
- Realisierung in Hardware unter Benutzung von schnellen Delta-/Sigma-Modulatoren mit anschließender Summierung über Hardware-Zähler;
- Verwendung von sehr schnellen Spannungs-/Frequenzwandlern mit nachgeschalteter Hardwarelogik aus Zählern.

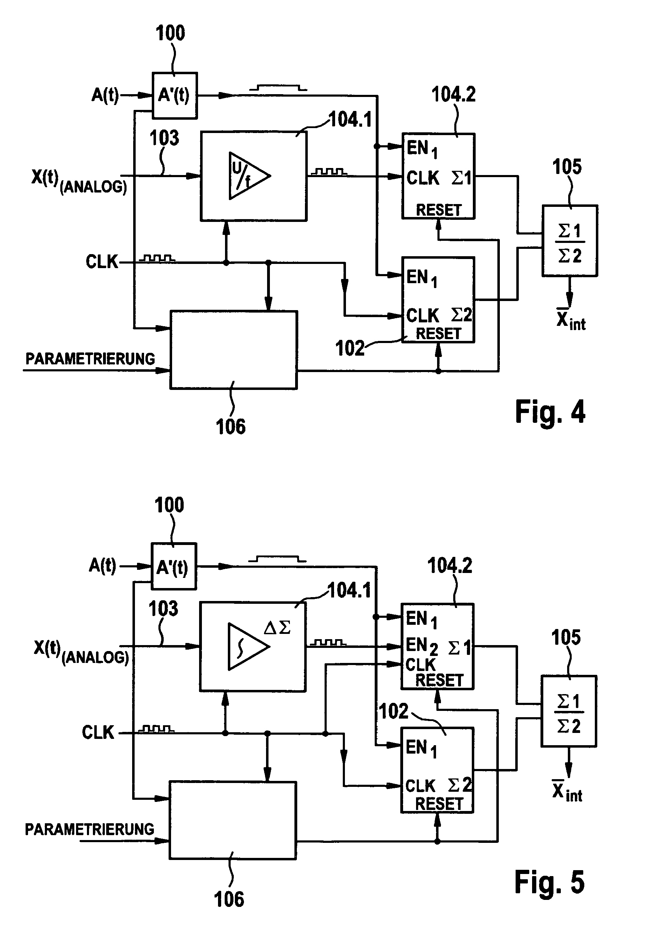

Fig. 4 zeigt eine erläuternde Darstellung eines vorteilhaften Zusammenwirkens der Schritte des erfindungsgemäßen Verfahrens gemäß einer ersten Ausführungsform. Das Verfahren wird hier mittels eines Spannungs-/Frequenzwandlers realisiert. In dieser ersten Ausführungsform ist die Integration (Schritt 104) als Mischrealisierung ausgeführt. Während Bezugsziffer 104.1 den analogen Integrationsschritt mittels Spannungs-/Frequenzwandler bezeichnet, steht Bezugsziffer 104.2 für die digitale Summation, z. B. mittels Zählern.

Fig. 5 zeigt eine erläuternde Darstellung eines vorteilhaften Zusammenwirkens der Schritte des erfindungsgemäßen Verfahrens gemäß einer zweiten Ausführungsform. Das Verfahren wird hier mittels Delta-/Sigma-Modulatoren realisiert. Während Bezugsziffer 104.1 den analogen Integrationsschritt mittels Delta-/Sigma-Modulatoren bezeichnet, steht Bezugsziffer 104.2 für die digitale Summation, z. B. mittels Zählern.

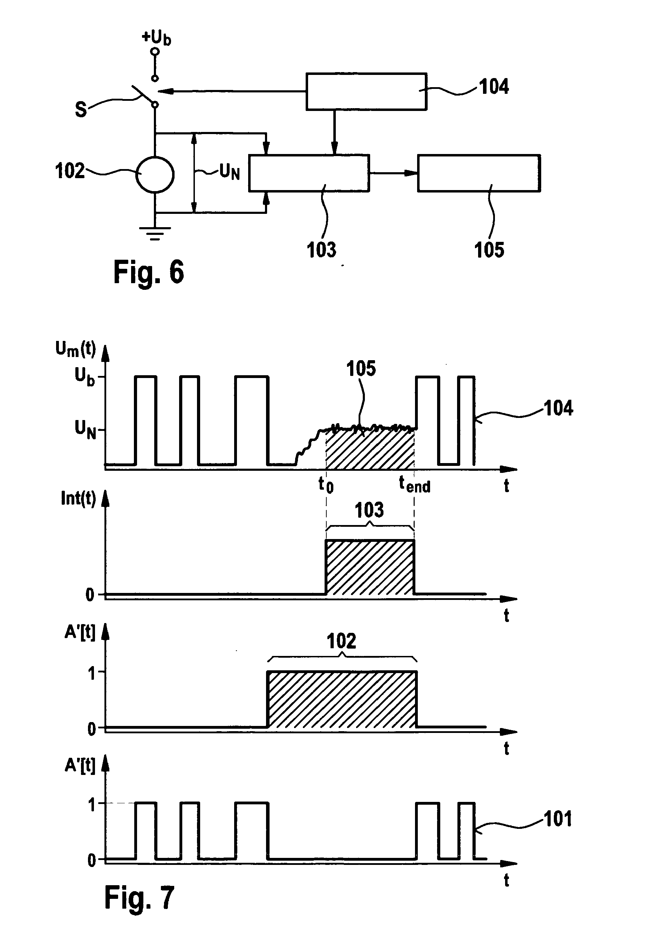

Anhand der Fign. 6, 7 und 8 wird im Folgenden die Einbettung des erfindungsgemäßen Verfahrens in eine integrative Messmethode in getakteten Systemen zur Drehzahlerfassung an Gleichstrommotoren (DC-Motoren) beschrieben.

Erfindungsgemäß erfolgt dabei die Messung der generatorischen Nachlaufspannung mittels integrativer Messmethode. Die Integrationszeit ist dabei einstellbar. Das gilt sowohl für den Startzeitpunkt wie auch den Endzeitpunkt der jeweiligen Integrationszeiträume, und damit letztlich auch für die Dauer der Integrationszeiträume. Die nachfolgend beschriebene Realisierung ermöglicht es, die drehzahlabhängigen Störsignalanteile, wie sie beispielsweise durch den Kommutator des Elektromotors entstehen, deutlich zu reduzieren. Damit ist eine Verbesserung der Qualität des ermittelten Nachlaufspannungswertes möglich. Dadurch ist letztlich eine präzisere Motorregelung möglich, speziell bei niedrigen Drehzahlen.

Fig. 6 zeigt in vereinfachter schematischer Darstellung die Messung der generatorischen Nachlaufspannung als Bestandteil der Drehzahlbestimmung. Während der Motoransteuerung werden von der Synchronisierungslogik 104 Nichtanstcuerungsphasen eingefügt, in denen der DC-Motor 102 eine generatorische Nachlaufspannung $U_N$ erzeugt, die sich von der Betriebsspannung $U_b$ bei geschlossenem Schalter S unterscheiden kann (in der Regel ist $U_N < U_b$). Die Nachlaufspannung ist proportional zur Motordrehzahl. Wenn die Ermittlung der Nachlaufspannung abgeschlossen ist, wird die Motoransteuerung fortgesetzt. Die Nachlaufspannung wird gemäß dem erfindungsgemäßen Verfahren in zumindest einer dieser Nichtansteuerungsphasen mittels einer integrativen Messmethode 103 ermittelt (im Block 105 wird dann die berechnete Generatorspannung ausgegeben). Die Dauer der Nichtansteuerungsphase wird dabei abhängig von der gewünschten bzw. benötigten Qualität der Messung eingestellt. Beispielsweise wird bei niedrigen Drehzahlen eine längere Nichtansteuerungsphase gewählt als bei hohen Drehzahlen. Dies ermöglicht eine bessere Filterung der Störanteile im niedrigen Drehzahlbereich und eine höhere Dynamik im hohen Drehzahlbereich. Außerdem kann die Dauer der Nichtansteuerungsphase von der Last abhängig gemacht werden. Beispielsweise kann bei höherer Last am DC-Motor eine kürzere Nichtansteuerungsphase gewählt werden, um eine möglichst hohe Leistung des Motors zu gewährleisten. Bei niedrigerer Last am Motor kann durch längere Nichtansteuerungsphasen eine präzisere Messung und damit eine präzisere Drehzahlregelung erzielt werden.

In Fig. 7 wird der zeitliche Ablauf der Messung der generatorischen Nachlaufspannung gemäß einer bevorzugten Ausführungsform der vorliegenden Erfindung dargestellt. Dabei ist im untersten Graphen der zeitliche Verlauf der Motoransteuerung 101 dargestellt (A'(t) = 0 → keine Motoransteuerung; A'(t) = 1 → Motor wird angesteuert). Im Graphen darüber ist der zeitliche Verlauf einer längeren Nichtansteuerungsphase 102 dargestellt (A'(t) = 1 → Nichtansteuerungsphase), welche mit der der entsprechenden längeren Phase A'(t) = 0 im unteren Motoransteuerungsgraphen 101 korrespondiert. Im zweitobersten Graphen ist der Integrationszeitraum 103 (Int(t) = 1) dargestellt, welcher sich innerhalb des Nichtansteuerungszeitraums 102 befindet. Im obersten Graphen 104 ist der zeitliche Verlauf der Motorspannung $U_m(t)$ gezeigt in Abhängigkeit von der fluchtend darunter dargestellten Motoransteuerung 101, der längeren Nichtansteuerungsphase 102 und der Integrationsphase 103. Während der Motoransteuerungsphasen fällt die Versorgungsspannung $U_b$ am Motor ab. In längeren Nichtansteuerungsphasen fällt nach einiger Zeit die Nachlaufspannung $U_N$ über dem Motor ab.

In der längeren Nichtansteuerungsphase 102 wird die Motoransteuerung 101 unterbrochen, d. h. der Motorschalter S in Fig. 6 ist unterbrochen. Die Integrationsphase 103 (mit Int(t) = 1) beginnt, nachdem der induktive Strom im DC-Motor abgebaut ist. Der Startzeitpunkt $t_0$ der Integrationsphase 103 kann z. B. durch eine konstante Zeitverzögerung relativ zum Anfang der längeren Nichtansteuerungsphase 102 bestimmt werden. Der Endzeitpunkt $t_{end}$ der Integrationsphase 103 liegt vorzugsweise vor dem Ende der Nichtansteuerungsphase. Der Endzeitpunkt $t_{end}$ kann aber auch mit dem Ende der Nichtansteuerungsphase zusammenfallen. Die gemessene Motorspannung Um im Graphen 104 wird während der Integrationsphase 103 integrativ ermittelt, wie dies im oberen Teil der Beschreibung bereits eingehend erläutert wurde. Die im Graphen 104 schraffierte Fläche 105 entspricht dem Integral über die Motorspannung Um während der Integrationsphase 103.

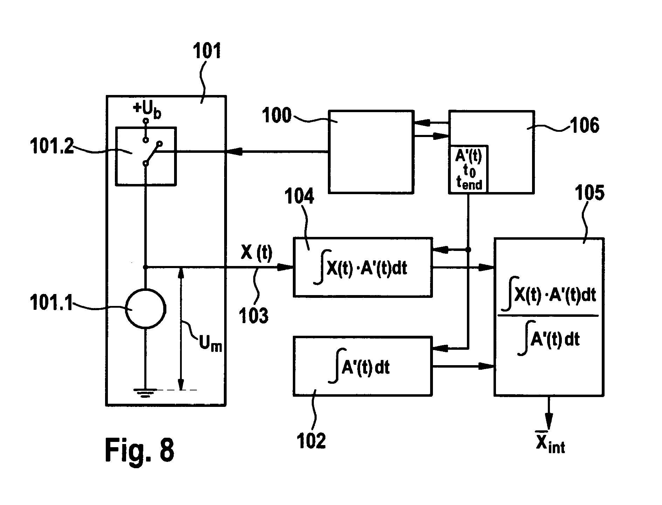

Fig. 8 zeigt eine detaillierte erläuternde Darstellung des vorteilhaften Zusammenwirkens der Schritte des erfindungsgemäßen Verfahrens in der oben beschriebenen integrativen Messmethode zur Drehzahlerfassung an Gleichstrommotoren. Die Fig. 8 stimmt auf ihrer rechten Seite mit der Fig. 2 überein, weshalb zur Vermeidung von Wiederholungen bezüglich der gleichen Figurenbestandteile auf die entsprechenden Ausführungen weiter oben zu Fig. 2 verwiesen wird. Im linken Teil der Fig. 8 zeigt der Block "angesteuertes System" 101 den schematischen Motorpfad einer DC-Motoransteuerung. Der Motorschalter 101.2, welcher vorzugsweise als Halbleiterschalter ausgeführt ist, wird angesteuert von der Motoransteuerung 100. Der DC-Motor 101.1 wird über den Motorschalter 101.2 mit der Spannungsversorgung $U_b$ verbunden. Die Ablaufsteuerung 106 generiert A'(t) und to und $t_{end}$. A'(t) nimmt während der Nichtansteuerungsphase 102 den Wert 1 an.

Das oben beschriebene Verfahren ist besonders gut für die ESP- oder die ABS-Motoransteuerung geeignet. Die Erfindung ist aber nicht auf die Anwendung in diesen Bereichen beschränkt.

## Patentansprüche

1. Verfahren zur Messwertermittlung in einem getaktet angesteuerten Gleichstrommotor (101), wobei die Taktung Ansteuerungszeiträume aufweist, in denen der Gleichstrommotor (101) angesteuert wird, und Nichtansteuerungszeiträume aufweist, in denen der Gleichstrommotor (101) nicht angesteuert wird, wobei das Verfahren folgende Schritte umfasst:

   - Einstellen einer Dauer der Nichtansteuerungszeiträume zumindest während der Messwerteermittlung abhängig von einer Motorlast und/oder einer Motordrehzahl des Gleichstrommotors (101);
   - Bestimmen (102.1) von ersten Integrationszeiträumen in Abhängigkeit von der Taktung, wobei die ersten Integrationszeiträume innerhalb wenigstens eines der Ansteuerungszeiträume liegen, und/oder Bestimmen (102.2) von zweiten Integrationszeiträumen in Abhängigkeit von der Taktung, wobei die zweiten Integrationszeiträume innerhalb wenigstens eines der Nichtansteuerungszeiträume liegen,
   - Erfassen (103) einer generatorischen Nachlaufspannung ($U_N$) des Gleichstrommotors (101),
   - Ermitteln (104) von Summations- und/oder Integrationswerten durch Summation und/oder Integration der generatorischen Nachlaufspannung ($U_N$) während der ersten und/oder zweiten Integrationszeiträume,
   - Ermitteln (105) des Messwertes für wenigstens einen der Ansteuerungszeiträume und/oder Nichtansteuerungszeiträume auf Grundlage von Zeitdaten der ersten und/oder zweiten Integrationszeiträume und von den ermittelten Summations-und/oder Integrationswerten, wobei die Zeitdaten das Integral einer Schalterfunktion (A'(t)) über die Integrationszeiträume aufweisen.

2. Verfahren nach Anspruch 1, wobei das Bestimmen (102.1, 102.2) der ersten und/oder zweiten Integrationszeiträume außerdem in Abhängigkeit von wenigstens einem individuellen Parameter des Gleichstrommotors (101) erfolgt.

3. Verfahren nach Anspruch 2, wobei bei den individuellen Parametern die Trägheit des Gleichstrommotors (101) und/oder seiner Messumgebung berücksichtigt wird.

4. Verfahren nach Anspruch 2 oder 3, wobei bei den individuellen Parametern die Zeitverzögerung berücksichtigt wird, mit der der Gleichstrommotor (101) auf die Ansteuerungen reagiert.

5. Verfahren nach einem der Ansprüche 2 bis 4, wobei bei den individuellen Parametern die Zeitverzögerung bei der Durchführung von einem oder mehreren der Schritte 103, 104 und 105 berücksichtigt wird.

6. Verfahren nach einem der Ansprüche 1 bis 5, wobei die Durchführung des Schrittes 104 die Verwendung von digitaler Summation und/oder analoger Integration umfasst.

7. Verfahren nach Anspruch 6, wobei die Durchführung des Schrittes 104 durch eine Mischung mindestens eines analogen Integrationsschrittes, beispielsweise mittels eines Spannungs-/Frequenzwandiers, und mindestens einer digitalen Summation, beispielsweise mittels einer Hardwarelogik aus Zählern, realisiert wird.

8. Verfahren nach Anspruch 6, wobei die Durchführung des Schrittes 104 durch eine Mischung mindestens eines analogen Integrationsschrittes, beispielsweise mittels Delta-/Sigma-Modulatoren, und mindestens einer digitalen Summation, beispielsweise mittels einer Hardwarelogik aus Zählern, realisiert wird.

9. Verfahren nach einem der vorangehenden Ansprüche, wobei die Summations- und/oder Integrationswerte nur während der zweiten Integrationszeiträume innerhalb wenigstens eines der Nichtansteuerungszeiträume ermittelt werden.

10. Verfahren nach einem der vorangehenden Ansprüche, wobei auf Grundlage der ermittelten generatorischen Nachlaufspannung ($U_N$) die Motordrehzahl ermittelt wird.

11. Verfahren nach einem der vorangehenden Ansprüche, wobei bei niedrigen Motordrehzahlen des Gleichstrommotors (101) ein längerer Nichtansteuerungszeitraum eingestellt wird als bei hohen Motordrehzahlen des Gleichstrommotors (101).

12. Verfahren nach einem der vorangehenden Ansprüche, wobei bei höherer Motorlast des Gleichstrommotors (101) ein kürzerer Nichtansteuerungszeitraum eingestellt wird als bei niedrigerer Motorlast des Gleichstrommotors (101).

**Claims**

1. Method for determining measured values in a DC motor (101) driver in a clocked manner, the clocking having driving periods, in which the DC motor (101) is driven, and non-driving periods, in which the DC motor (101) is not driven, the method comprising Lhe following steps of:

   - setting a duration of the ron-driving periods, at least while determining measured values, on the basis of a motor load and/or a motor rotational speed of the DC motor (101), determining (102.1) first integration periods on the basis of the clocking, the first integration periods being inside at least one of the driving periods, and/or determining (102.2) second integration periods on the basis of the clocking, Lhe second integration periods being inside at least one of the non-driving periods,
   - detecting (103) a generator run-on voltage ($U_K$) of the DC motor (101),
   - determining (104) summation and/or integration values by summing and/or integrating the generator run-on voltage ($U_N$) during the first and/or second integration periods,
   - determining (105) the measured value for at least one of the driving periods and/or non-driving periods on the basis of time data relating to the first and/or second Integration periods and of the summation and/or integration values determined, the time data having the integral of a switch function ($A'(L)$) over the integration periods.

2. Method according to Claim 1, the operation of determining (102.1, 102.2) the first and/or second integration periods also being carried out on the basis of at least one individual parameter of the DC: motor (101).

3. Method according to Claim 2, the inertia of the DC motor (101) and/or of its measurement environment being taken into account in the individual parameters.

4. Method according to Claim 2 or 3, Lhe time delay with which the DC motor (101) responds to the driving operations being taken into account in the individual parameters.

5. Method according to one of Claims 2 to 4, the time delay when carrying out one or more of steps 103, 104 and 105 being taken into account, in the individual parameters.

6. Method according to one of Claims 1 to 5, the operation of carrying out step 104 comprising the use of digital Summation and/or analogue integration.

7. Method according to Claim 6, step 104 being carried out by mixing at least one analogue integration step, for example using a voltage/frequency converter, and at least one digital summation, for example using hardware logic comprising counters.

8. Method according to Claim 6, step 104 being carried out by mixing at least one analogue integration step, for example using delta/sigma modulators, and al least one digital summation, for example using hardware logic comprising counters

9. Method according to one of the preceding claims, the summation and/or integration values being determined only during the second integration periods inside at least one of the non-driving periods.

10. Method according to one of the preceding claims, the motor rotational speed being determined on the basis of the generator run-on voltage ($U_N$) determined.

11. Method according to one of the preceding claims, a longer non-driving period being set in the case of low motor rotational speeds of the DC motor (101) than in the case of high motor rotational speeds of the DC motor (101).

12. Method according to one of the preceding claims, a shorter non-driving period being set in the case of a higher motor load of the DC motor (101) than in the case of a lower motor lead of the DC motor (101).

**Revendications**

1. Procédé de détermination de valeurs de mesure dans un moteur à courant continu (101) commandé par cadencement, dans lequel le cadencement comprend des périodes de commande lors desquelles le moteur à courant continu (101) est commandé, et des périodes de non-commande lors desquelles le moteur à courant continu (101) n'est pas commandé, dans lequel le procédé comprend les étapes suivantes :

   - réglage d'une durée des périodes de non commande au moins pendant la détermination des valeurs de mesure en fonction d'une charge du monteur et/ou d'une vitesse de rotation du moteur à courant continu (101) ;
   - détermination (102.1) de premières périodes d'intégration en fonction du cadencement, les premières périodes d'intégration se situant à l'intérieur d'au moins l'une des période de commande, et/ou détermination (102.2) de secondes périodes d'intégration en fonction du cadencement, les secondes périodes d'intégration se situant à l'interieur d'au moins l'une des périodes de non-commande,
   - détection (103) d'une tension résiduelle génératrice ($U_N$) du moteur à courant continu (101),
   - determination (104) de valeurs de sommation et/ou d'integration par sommation et/ou intégration de la tension résiduelle génératrice ($U_N$) pendant les premières et/ou secondes périodes d'intégration,
   - détermination (105) de la valeur de mesure pour au moins l'une des périodes de commande et/ou des périodes de non-commande sur la base de données temporelles des premières et/ou secondes périodes d'integration et des valeurs de sommation et/ou d'intégration déterminées, dans lequel les données temporelles comprennent l'intégrale d'une fonction de commutation (A'(t)) sur les périodes d'intégration.

2. Procédé selon la revendication 1, dans lequel la détermination (102.1, 102.2) des premières et/ou secondes périodes d'intégration s'effectue en outre en fonction d'au moins un paramètre individuel du moteur à courant continu (101).

3. Procédé selon la revendication 2, dans lequel on prend en compte pour les paramètres individuels l'inertie du moteur à courant continu (101) et/ou son environnement de mesure.

4. Procédé selon la revendication 2 ou 3, dans lequel on prend en compte pour les paramètres individuels le retard temporel avec lequel le moteur à courant continu (101) réagit aux commandes.

5. Procédé selon l'une quelconque des revendications 2 à 4, dans lequel on prend en compte pour les paramètres individuels le retard temporel se produisant lors de l'exécution de l'une ou plusieurs des étapes 103, 104 et 105.

6. Procédé selon l'une quelconque des revendications 1 à 5, dans lequel l'exécution de l'étape 104 comprend l'utilisation d'une sommation numérique et/nu d'une intégration analogique.

7. Précédé selon la revendication 6, dans lequel l'exécution de l'étape 104 est réalisée par une combinaison d'au moins une étape d'intégration analogique, par exemple au moyen d'un convertisseur tension/fréquence, et d'au moins une sommation numérique, par exemple au moyen d'une logique materielle constituée de compteurs.

8. Procédé salon la revendication 6, dans lequel l'exécution de l'étape 104 est réalisée par une combinaison d'au moins une étape d'intégration analogique, par exemple au moyen de modulateurs delta/sigma, et d'au moins une sommation numérique, par exemple au moyen d'une logique matérielle constituée de compteurs.

9. Procédé selon l'une quelconque des revendications précédentes, dans lequel les valeurs de sommation et/ou d'intégration ne sont déterminées que pendant les secondes périodes d'intégration se situant à l'intérieur d'au moins l'une des périodes de non-commande.

10. Procédé selon l'une quelconque des revendications précédentes, dans lequel on détermine la vitesse de rotation du moteur sur la base de la tension résiduelle génératrice ($U_N$) déterminée.

11. Procédé selon l'une quelconque des revendications précédentes, dans lequel, lorsque la vitesse de rotation du moteur à courant continu (101) diminue, on règle une période de non-commande plus longue que lorsque la vitesse de rotation du moteur à courant continu (101) est élevée.

12. Procédé selon l'une quelconque des revendications précédentes, dans lequel, lorsque la charge du moteur à courant continu (101) est plus élevée, on règle une période de non-commande plus courte que lorsque la charge du moteur à courant continu (101) est plus faible.

**Fig. 1**

**Fig. 2**

**Fig. 3**

Fig. 4

Fig. 5

**Fig. 6**

**Fig. 7**

**Fig. 8**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10359224
- DE 102005013143